Europäisches Patentamt

European Patent Office

Office européen des brevets

(19)

(11) Veröffentlichungsnummer: **0 058 382**
**B1**

(12) **EUROPÄISCHE PATENTSCHRIFT**

(45) Veröffentlichungstag der Patentschrift:
**12.10.83**

(51) Int. Cl.³: **C 09 J 3/14**, C 09 J 7/04

(21) Anmeldenummer: **82100948.7**

(22) Anmeldetag: **10.02.82**

(54) **Wasserlösliche, druckempfindliche Selbstklebemasse (Haftklebemasse) und damit hergestellte Haftklebeartikel.**

(30) Priorität: **18.02.81 DE 3105894**

(43) Veröffentlichungstag der Anmeldung:
**25.08.82 Patentblatt 82/34**

(45) Bekanntmachung des Hinweises auf die Patenterteilung:
**12.10.83 Patentblatt 83/41**

(84) Benannte Vertragsstaaten:
**DE FR GB IT SE**

(56) Entgegenhaltungen:
**FR-A-2 158 266**
**FR-A-2 447 956**
**US-A-4 145 327**

(73) Patentinhaber: **Beiersdorf Aktiengesellschaft,
Unnastrasse 48, D-2000 Hamburg 20 (DE)**

(72) Erfinder: **Gleichenhagen, Peter, Dr. Dipl.-Chem.,
Holitzberg 9, D-2000 Hamburg 62 (DE)**
Erfinder: **Wesselkamp, Ingrid, An der Marienanlage 8a,
D-2000 Hamburg 70 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Wasserlösliche, druckempfindliche Selbstklebemasse (Haftklebemasse) und damit hergestellte Haftklebeartikel

Die Erfindung betrifft in Wasser lösliche, als viskose Lösung auftragbare druckempfindliche Selbstklebemassen und damit hergestellte Haftklebebänder oder andere selbstklebende Artikel, die insbesondere in der Papierindustrie zum Endlosmachen von Papierbahnen verwendet werden können.

Bei der Herstellung und Veredelung von Papieren ist es in der Papierindustrie üblich, das Ende einer Papierrolle mit dem Anfang der nächsten Papierrolle durch Spleissen zu verbinden, um kontinuierlich fertigen zu können (sog. Endlosmachen von Papierbahnen). Ebenso müssen nach dem Herausschneiden der Fehlstellen die freien Bahnenden durch einen Spleissvorgang wieder zusammengefügt werden. Für diesen speziellen Zweck, der Vereinigung von Papierbahnenden, ist ein Klebeband (Haftklebeband) mit einer Selbstklebemasse erforderlich, die bei minimalem Andruck leicht und schnell auf das Papier aufzieht und während der weiteren Arbeitsgänge die Bahnenden zusammenhält. Die hierbei notwendigen Spleissoperationen werden häufig von Hand durchgeführt. In Beschichtungsanlagen, in denen der Rollen- oder Ballenwechsel bei laufenden Maschinen, d.h. ohne Abschalten der Maschinen, bewerkstelligt wird (fliegender Ballenwechsel), wird das Spleissen der Papierbahnen hingegen maschinell durchgeführt. Nach der Fertigung des Papiers bzw. nach Abschluss des Veredelungsprozesses werden die Ansatzstellen mit dem Klebeband herausgeschnitten. Die erfindungsgemässen Haftklebemassen bzw. die damit hergestellten Haftklebeartikel sind vorrangig hervorragend für diesen speziellen Verwendungszweck geeignet.

Da unter dem Gesichtspunkt des sparsamen Umgangs mit Rohstoffen herausgeschnittene Fehlstellen in den Papierbahnen oder ganze Fehlchargen gegenwärtig nicht mehr vernichtet werden, sondern in den Syntheseprozess zurückgeführt werden (Recycling-Verfahren), müssen die für die Spleissung eingesetzten Haftklebematerialien wasserlöslich sein. Andernfalls wird bereits durch geringe Anteile nicht löslichen Haftklebematerials das aus derartigen Pulpen gewonnene Papier verunreinigt. Dies zeigt sich in fettfleckartigen Fehlstellen oder wolkigen Inhomogenitäten, die nicht nur eine optisch sichtbare Qualitätsminderung bewirken, sondern auch die anwendungstechnische Qualität des Papiers, beispielsweise dessen Beschriftbarkeit, erheblich einschränken. Für den vorstehenden Zweck eingesetzte Haftklebebänder sollten daher zur Erleichterung der Wiederaufbereitung aus einem im Pulper leicht zerschlagbaren Zelluloseträger bestehen, der keine Nassfestmittel enthält, und eine ein- oder beidseitig darauf aufgetragene wasserlösliche Klebstoffschicht aufweisen.

In den vergangenen Jahren wurde bereits eine Anzahl von unterschiedlich zusammengesetzten wasserlöslichen Selbstklebemassen entwickelt und für den genannten Zweck vorgeschlagen. Diese bestehen beispielsweise aus einem Gemisch von Polyvinylpyrrolidon mit monomeren Vernetzungsmitteln und Polyolen oder Polyalkylglykoläthern als Weichermacherzusätze (US-PS 3 096 202), aus dem Umsetzungsprodukt eines Copolymeren von Vinylmethyläther und Maleinsäureanhydrid mit einem Alkohol, das durch Zusatz eines flüssigen Polyvinylmethyläthers klebrig gemacht wird (GB-PS 941 276), aus einem Gemisch aus einem Acrylsäure-Alkoxyalkylacrylat-Copolymer und Polyäthylenglykol-monophenyläther, Polyäthylenglykol oder Polypropylenglykol als Weichmacher, das mit Natriumhydroxid und/oder Aminen teilneutralisiert wurde (US-PS 3 441 430) oder aus Acrylsäure-Acrylsäureester-Copolymerisaten unter Zusatz eines wasserlöslichen Wachses, wie Polyäthylenglykol und Polypropylenglykol, (US-PS 3 152 940) oder mit Alkanolaminen zur Neutralisation der Acrylsäure, gegebenenfalls unter Zusatz von weichmachenden Polyoxyäthylenverbindungen und/oder klebrigmachenden Reaktionsprodukten von sauren Harzen mit Alkanolaminen (DE-OS 2 360 441). In der US-PS 3 661 874 wird weiterhin ein wasserlöslicher druckempfindlicher Klebstoff beschrieben, der durch Umsetzung eines epoxydierten kautschukartigen Polymeren mit wasserlöslichen sekundären Monoaminen und Zusatz von Klebrigmachern erhalten wird.

Mit derartigen wasserlöslichen Selbstklebemassen (Haftklebemassen) kann ein ungeleimtes leichtes Papiervlies beidseitig beschichtet und das so erhaltene Klebeband in Form von Streifen auf das Anfangsstück eines Rohpapierballens aufgesetzt werden. Beim Spleissvorgang wird der so vorbereitete zweite Ballen gegen das auslaufende Ende des ersten Ballens geführt, mit diesem verklebt und ohne Unterbrechung des Maschinenlaufs in die Beschichtungsanlage eingezogen. Schnelligkeit und Sicherheit der Verklebung hängen bei diesem kontinuierlich ablaufenden Vorgang in hohem Masse von der klebtechnischen Qualität der dabei verwendeten Haftklebemasse ab.

Obwohl die beschriebenen bekannten wasserlöslichen Selbstklebemassen hinsichtlich ihrer Verwendung zum Endlosmachen von Papierbahnen gegenüber den früher üblichen wasserunlöslichen Selbstklebemassen auf Basis von Naturkautschuk oder Acrylsäureester-Homo- und -Copolymerisaten eine wesentliche Verbesserung darstellen, weisen sie in mancher Hinsicht Mängel auf, die ihre Einsatzmöglichkeiten beschränken. Anwendungstechnische Untersuchungen haben ergeben, dass entweder die klebtechnischen Eigenschaften dieser Haftklebemassen nicht den Anforderungen der Praxis entsprechen oder die Löslichkeit, insbesondere im sauren pH-Bereich, nicht in ausreichendem Masse gegeben ist. In Teilbereichen wurden die Anforderungen bisher am besten von Haftklebemassen auf der Basis von Copolymerisaten aus Acrylsäureestern und Acryl- oder Methacrylsäure erfüllt, die mit Alkanolaminen oder Natronlauge neutralisiert und durch Zusatz von wasserlöslichen Weichmachern, insbesondere von äthoxylierten Phenolen, haftklebrig eingestellt wurden. Die Neutralisation mit Alkanolaminen ergibt jedoch bei Haftklebemassen, die die klebtechnischen Eigenschaftsanforderungen einigermassen erfüllen, eine unzureichende Wasserlöslichkeit im sauren pH-Bereich. Es entstehen dabei häufig keine echten Lösungen, sondern kolloidale Dispersionen. Ausserdem ist die Alterungsbeständigkeit – bedingt durch Nebenreaktionen der Alkanolamine mit dem sauren Copolymer – eingeschränkt. Andererseits ist die Neutralisation mit Natronlauge nur bei verhältnismässig harten Copolymeren aus (Meth)Acrylsäure und Methyl- bzw. Äthylacrylat oder äthoxylieten Acrylestern möglich. Dabei wird zwar eine gute Löslichkeit in Wasser erzielt, die erwünschten klebtechnischen Eigenschaften können aber nur durch hohe Zusätze von Weichmachern eingestellt werden mit den daraus zwangsläufig resultierenden Nachteilen. Weichere Copolymere aus Butylacrylat und verhältnismässig geringen Anteilen Acryl- oder Methacrylsäure können mit Natriumhydroxid nicht neutralisiert werden, da hierfür keine technisch geeigneten Lösungsmittel zur Verfügung stehen und die aus speziellen Lösemittelgemischen erzeugten Haftklebefilme nur eine geringe Soforthaftung («Tack») zeigen.

Trotz der grossen Zahl der aufgezeigten bekannten Klebemassen unterschiedlicher Zusammensetzung besteht auch heute noch ein Bedarf an neuen, besseren wasserlöslichen Haftklebemassen für die Papierverklebung. Dies liegt im wesentlichen in der laufenden Modernisierung der Papierherstellung und Veredelung begründet, die wachsende Ansprüche an die Qualität der Verklebung stellt. Liefen vor wenigen Jahren die Beschichtungsanlagen noch mit Geschwindigkeiten von 500–800 m/min, so werden heute in modernen Anlagen die Papierbahnen mit Geschwindigkeiten von bis zu 1000–1200 m/min durch die Beschichtungs- und Trocknungsstufen gefahren. Gleichzeitig wird neuerdings der Andruck für die Verklebung der Papierbahnen beim fliegenden Rollenwechsel durch Luftbürsten erzeugt, der wesentlich geringer ist, als der Andruck durch Walzen, wie er in älteren Anlagen üblich war. Hierdurch bedingt werden die Anforderungen an die Soforthaftung («Tack») der Haftklebemasse erhöht. Trotz dieser erforderlichen hohen Soforthaftung (Anfassklebkraft), die verhältnismässig weiche Haftkleber erfordert, muss die Haftklebemasse gleichzeitig eine ausreichende innere Festigkeit (Kohäsion) aufweisen, damit die Verklebung der Scherbelastung durch den Bahnzug standhält. Diese innere Festigkeit muss auch bei den höheren Temperaturen in den Trocknungsstufen gewährleistet sein. Hinzu kommt, dass die geschilderten klebtechnischen Eigenschaften auch bereits bei sehr dünnen Klebschichten (‹ 100 $\mu$) vorhanden sein müssen,

damit die Dicke des Verklebungsstosses möglichst gering gehalten werden kann.

Darüber hinaus muss die Wasserlöslichkeit der Haftklebemasse über einen weiten pH-Bereich in vollem Umfange gewährleistet sein, da Papierpulpen sowohl im sauren pH-Bereich (pH ca. 3) als auch im alkalischen pH-Bereich (pH 9) aufbereitet werden. Es ist insbesondere bei der Herstellung von Feinpapieren erwünscht, dass die Masse sich in Form einer echten Lösung in Wasser löst und im Pulper nicht nur zu einer Dispersion zerschlagen wird. Da ausserdem die Verklebung häufig längere Zeit unter hohem Anpressruck im Papierballen verbleibt, dürfen keine Bestandteile der Haftklebemasse in das Papier eindringen, was zu fettartigen Flecken im Papier führen würde.

Um diesen erhöhten Anforderungen beim Einsatz zum Endlosmachen von Papierbahnen zu genügen, wurde eine wasserlösliche druckempfindliche Selbstklebemasse entwickelt, die aus einem Gemisch aus a) einem Acrylsäureester-Copolymerisat aus 70 bis 80 Gew.-Teile monomerem Äthylacrylat und 20 bis 30 Gew.-Teilen einer monomeren α,β-ungesättigten aliphatischen Monocarbonsäure, insbesondere Acrylsäure, und b) einem tertiären, äthoxylierten N-Alkyl-alkandiamin mit 3 bis 18 Äthylenoxideinheiten pro Molekül und einer am Stickstoffatom gebundenen Alkylgruppe mit 10 bis 18 Kohlenstoffatomen pro Molekül besteht, wobei der Säureanteil des Copolymerisats bis zu twa 70% neutralisiert ist, vorzugsweise unter Verwendung sowohl von Natronlauge als auch eines tertiären, äthoxylierten N-Alkyl-alkandiamines als Neutralisationsmittel (DE-OS 2 904 233). Unter Verwendung einer derartigen Klebemasse hergestellte Haftklebebänder vermögen zwar bedingt durch ihre aussergewöhnlichen klebtechnischen Eigenschaften und ihre leichte und schnelle rückstandsfreie Löslichkeit in Wasser sowohl im alkalischen und neutralen als auch im sauren pH-Bereich alle geforderten vorstehend geschilderten Anforderungen eines modernen Papierherstellungs- und -veredelungsbetriebes zu erfüllen, sie haben jedoch den Nachteil, dass die Herstellung einer solchen Klebemasse zwingend den Einsatz von Äthylacrylat als Esterkomponente des Copolymerisats erfordert und im übrigen die Auswahl der einzelnen Komponenten zu ihrer Herstellung auf enge Mengenbereiche und auf eine relativ geringe Anzahl von Substanzen beschränkt ist.

Aufgabe der Erfindung war es daher, eine druckempfindliche Selbstklebemasse (Haftklebemasse) insbesondere zum Endlosmachen von Papierbahnen zu schaffen, die einerseits neben einer hervorragenden Soforthaftung (Anfassklebkraft) und einer guten inneren Festigkeit (Kohäsion) die Eigenschaft besitzt, sich ohne mechanische Behandlung leicht und schnell in Wasser (rückstandsfrei) sowohl im alkalischen bis neutralen als auch im sauren pH-Bereich aufzulösen, und die andererseits gegenüber der in der DE-OS 2 904 233 beschriebenen Klebemasse den grossen Vorteil aufweist, dass bezüglich der Auswahl der Komponenten und Mengenbereiche zu ihrer Herstellung eine wesentlich grössere Variationsbreite gegeben ist.

Es wurde gefunden und darin liegt die Lösung der Aufgabe, dass in organischen Lösungen erzeugte Copolymere aus Butylacrylat und einer Vinylcarbonsäure (vorzugsweise Acryl- und/oder Methacrylsäure) - mit Kaliumhydroxid (Kalilauge) neutralisiert und mit speziellen wasserlöslichen Weichmachern haftklebrig eingestellt - wasserlösliche Haftklebemassen ergeben, die die erwünschten wertvollen Eigenschaften aufweisen, somit alle oben geschilderten Anforderungen eines modernen Papierherstellungs- oder -veredelungsbetriebes in vollem Umfang zu erfüllen vermögen und für deren Herstellung andererseits hinsichtlich der Auswahl geeigneter Substanzen und Mengenbereiche eine grosse Variationsbreite gegeben ist. Sie ermöglichen zudem den Einsatz des gegenüber Äthylacrylat wesentlich hydrophoberen, zu weicheren Copolymeren mit ausgeprägteren Haftklebereigenschaften führenden Butylacrylats anstelle von Äthylacrylat in wasserlöslichen Haftklebemassen.

Gegenstand der Erfindung ist somit eine wasserlösliche, als viskose Lösung auftragbare druckempfindliche Selbstklebemasse (Haftklebemasse) auf der Basis eines Gemisches aus einem Acrylsäureester-Vinylcarbonsäure-Copolymerisat und einem wasserlöslichen Weichmacher, bei dem der Säureanteil des Copolymerisats zu einem überwiegenden Teil neutralisiert ist, dadurch gekennzeichnet, dass das Gemisch, bezogen auf 100 Gewichtsteile Feststoffe, aus

a) 30 bis 80 Gewichtsteilen eines Copolymerisats aus 70 bis 88 Gewichts-% Acrylsäurebutylester und 12 bis 30 Gewichts-%, vorzugsweise 15 bis 22 Gewichts-%, einer Vinylcarbonsäure, dessen Acrylsäurebutylester-Anteil, bezogen auf das Gesamtgewicht der Monomeren, zu 3 bis 12 Gewichts-% durch Acrylsäure-2-äthylhexylester und/oder zu 5 bis 25 Gewichts-% durch eine Mischung von Vinylacetat mit einem Fumarsäuredialkylester ersetzt sein kann, und
b) 20 bis 70 Gewichtsteilen eines äthoxylierten (Alkyl)phenols, eines äthoxylierten Alkylmono- oder -diamins oder einer äthoxylierten Alkylammonium-Verbindung als Weichmacher

besteht, wobei der Säureanteil des Copolymerisats praktisch vollständig mit Kaliumhydroxid (Kalilauge), vorzugsweise unter Verwendung eines Überschusses dieser Base, neutralisiert ist.

Besonders hochwertige wasserlösliche Haftklebemassen werden erhalten, wenn man neben Butylacrylat und der Vinylcarbonsäure geringe Anteile einer Mischung von Vinylacetat mit Fumarsäuredialkylestern und/oder 2-Äthyl-hexylacrylat in das Copolymer einpolymerisiert. Dabei können von dem 70 bis 88 Gewichts-%, bezogen auf das Gesamtgewicht der Monomeren, betragenden Acrylsäurebutylester-Anteil im Monomerengemisch 3 bis 12 Gewichts-% durch Acrylsäure-2-äthylhexylester (2-Äthyl-hexylacrylat) und/ oder 5 bis 25 Gewichts-% durch eine Mischung von Vinylacetat mit einem Fumarsäure-dialkylester ersetzt werden.

Als Fumarsäure-dialkylester können solche Diester der Fumarsäure verwendet werden, die 3 bis 10 Kohlenstoffatome im Alkoholrest enthalten, vorzugsweise jedoch Fumarsäure-di-n-butylester und Fumarsäure-di-2-äthylhexylester. Das Mischungsverhältnis von Vinylacetat gegenüber dem Fumarsäuredialkylester in der Mischung dieser beiden Substanzen kann 1:2 bis 1:4 betragen, bevorzugt: 1:2,5.

Die Vinylcarbonsäure, deren Anteil im Monomerengemisch, bezogen auf das Gesamtgewicht der Monomeren, 12 bis 30 Gewichts-% und vorzugsweise 15 bis 22 Gewichts-% beträgt, kann aus Acrylsäure, Methacrylsäure oder Itaconsäure oder deren Mischungen bestehen. Auch Crotonsäure kann in kleinen Anteilen eingesetzt werden. Acrylsäure wird jedoch bevorzugt. Je höher der Gehalt an einpolymerisierter Acrylsäure oder an einer anderen der genannten Säuren, desto härter und weniger klebrig ist das Copolymer. Es wird daher angestrebt, nur soviel der sauren Komponente einzupolymerisieren, wie zur Erzielung einer guten Löslichkeit in Wasser nach erfolgter Neutralisation mit Kaliumhydroxid (Kalilauge) unerlässlich ist.

Das Copolymerisat kann nach den üblichen Verfahren durch radikalische Polymerisation in organischen Lösungsmitteln hergestellt werden. Zu diesem Zweck wird das Monomerengemisch bei einer Konzentration von etwa 50 Gewichts-% - je nach dem Grade der Löslichkeit der speziellen, darin enthaltenen Monomeren - in Aceton oder Toluol und/oder in Gemischen von Aceton mit Benzin oder Wasser auf 55–75°C erwärmt. Beim Siedepunkt des Gemisches wird alsdann unter Inertgas mit Radikalbildnern, wie Azoisobuttersäuredinitril oder Benzoylperoxid, die Polymerisation initiiert. Mit zunehmender Viskosität wird weiteres Lösungsmittel zugesetzt, um das Reaktionsgut rührfähig zu halten. Enthält das Monomerengemisch Anteile von Vinylacetat in Kombination mit Fumar- und/oder Maleinsäureestern, so kann unter dem Einfluss dieser Substanzen die Reaktionsgeschwindigkeit der Polymerisation soweit verringert werden, dass die Polymerisationswärme mühelos abgeführt werden kann. Durch die regelnde Wirkung der obengenannten Ester wird auch die Gefahr der Gelbildung, die duch Vernetzung während des Polymerisationsprozesses bedingt ist, verringert. Häufig empfiehlt sich die Verwendung einer den Prozessverlauf zusätzlich regelnden Substanz, z.B. Tetrabrommethan. Gewöhnlich ist die Reaktion nach 12 bis 18 Stunden beendet. Danach werden der bzw. die Weichmacher, eventuell Harze, und das Neutralisationsmittel in der beschriebenen Reihenfolge zugesetzt und zur Einstellung einer gut streichfähigen viskosen Lösung gegebenenfalls weiteres Lösungsmittel zugefügt.

Bevorzugt soll das Copolymerisat aus einem Monomerengemisch hergestellt werden bzw. die erfindungsgemässe wasserlösliche Selbstklebemasse ein solches als Komponente a) enthalten, das – jeweils bezogen auf das Gesamtgewicht der Monomeren – neben 58 bis 80 Gewichts-% Acrylsäurebutylester (n-Butylacrylat) 15 bis 22 Gewichts-% Acrylsäure und 5 bis 20 Gewichts-% einer Mischung von Vinylacetat mit Fumarsäure-di-2-äthylhexylester im Verhältnis 1:2 bis 1:4 enthält.

Als wasserlösliche Weichmacher, die gemäss der Erfindung dem neutralisierten Copolymerisat in einer Menge von 20 bis 70 Gewichts-%, bezogen auf den lösungsmittelfreien Anteil der Gesamtmischung (= 100 Gewichtsteile Feststoffe) zugesetzt werden (Komponente b), können äthoxylierte (Alkyl)phenole, wie z.B. (Nonyl)phenolpolyglykoläther, äthoxylierte Alkylmono- oder -diamine, wie z.B. die Äthoxylierungsprodukte des N-Alkyl-trimethylendiamins, oder äthoxylierte Alkylammonium-Verbindungen verwendet werden.

Zwecks Modifizierung der Eigenschaften der wasserlöslichen Selbstklebemasse (Haftklebemasse) gemäss der Erfindung bzw. um dieser für spezielle Verwendungsbereiche erwünschte, besonders günstige Eigenschaften zu verleihen, können dem Gemisch aus den Komponenten a) und b) 2 bis 30 Gewichts-%, bezogen auf den gesamten lösungsmittelfreien Anteil der Mischung (Feststoffgehalt), – vorzugsweise zusammen mit geringen Mengen anionischer oder nichtionischer Emulgatoren – wasserunlösliche Klebharze, z.B. modifizierte Kolophoniumharze, wie hydrierte oder disproportionierte Kolophoniumharz-Typen, zugesetzt werden. Derartige Zusätze von in Wasser unlöslichen Klebharzen vermögen die Haftklebrigkeit der wasserlöslichen Selbstklebemasse zu erhöhen. Sie werden von den wasserlöslichen Bestandteilen der Haftklebemasse kolloidal in Lösung gebracht. Geringe Zusätze von Emulgatoren zur Haftklebemasse können die Auflösung in Wasser beschleunigen.

Das freie Carboxylgruppen enthaltende Copolymerisat wird gemäss der Erfindung durch Zusatz von Kaliumhydroxid (Kalilauge) praktisch vollständig neutralisiert, vorzugsweise unter Verwendung eines Überschusses dieser Base. Dabei soll zur Neutralisation des Säureanteils des Copolymerisats eine solche Menge an Kaliumhydroxid (Kalilauge) verwendet werden, dass auf ein Mol Carboxylgruppen im Polymer zumindest ein Mol der Base eingesetzt wird. Dabei konnte überraschenderweise festgestellt werden, dass die Neutralisation mit Kaliumhydroxid (Kalilauge) nicht nur eine ausgezeichnete Löslichkeit der Haftklebemasse in Wasser selbst bei sehr unterschiedlichen pH-Werten (pH:3–9) bewirkt, sondern auch einen stark positiven Einfluss auf die klebtechnischen Eigenschaften ausübt, der durch eine Überneutralisation (Verwendung eines Überschusses an KOH) noch verstärkt werden kann. Die mit Kaliumhydroxyd (Kalilauge) neutralisierten Copolymeren sind in technisch verfügbaren Lösungsmitteln ausreichend löslich, insbesondere dann, wenn die obengenannten, als Lösungsvermittler wirkenden Weichmacher zugesetzt werden. Als Lösemittel für die technische Synthese der Copolymeren und anschliessende Verarbeitung der abgemischten Haftklebemasse werden bevorzugt Gemische aus Toluol, Aceton, Isopropanol und Benzin verwendet.

Da die Reaktionsfähigkeit der Carboxylgruppen im Copolymer durch Salzbildung mit der starken anorganischen Alkalibase stark vermindert ist und dadurch bedingt die Esterbildung mit den Hydroxylgruppen oder die Amidbildung mit den Amingruppen der wasserlöslichen Weichmacher erheblich behindert wird, zeigen die erfindungsgemässen Haftklebemassen eine verhältnismässig gute Alterungsbeständigkeit. Aus diesem Grund und wegen des positiven Einflusses auf die klebtechnischen Eigenschaften der Haftklebemasse wird eine praktisch vollständige Neutralisation (Salzbildung) der im Copolymer vorhandenen Carboxylgruppen mittels Kaliumhydroxid angestrebt.

Die erfindungsgemässen Haftklebemassen zeichnen sich durch eine sehr hohe Soforthaftung (Anfassklebkraft) auf Papieren, gute innere Festigkeit (Kohäsion) sowie rasche und vollständige (rückstandsfreie) Löslichkeit in Wasser bei pH-Bereichen von 3 bis 9 aus. Damit versehene Papiere werden auch bei längerer Lagerung von den Haftklebemassen nicht durchfettet.

Zur Herstellung von Haftklebebändern zum Endlosmachen von Papierbahnen wird ein leicht repulpierbares Papier oder Vlies ein- oder beidseitig mit der erfindungsgemässen wasserlöslichen Selbstklebemasse nach üblichen Verfahrensweisen beschichtet, getrocknet und gegebenenfalls nach Ausrüstung mit Trennschichten oder Trennpapieren zu Rollen aufgewickelt, die anschliessend mittels üblicher Schneidvorrichtung in gewünschte Breiten geschnitten werden können. Füllstoffe werden der Haftklebemasse im allgemeinen nicht zugesetzt. Es kann jedoch von Vorteil sein, in die Haftklebemasse zur Erhöhung der Kohäsion einen geringen Anteil (etwa 1 bis 5 Gewichts-%) an kurzen Cellulose- oder anderen Fasern einzumischen. Bei kohäsiven Haftklebemassen kann das Einmischen derartiger Fasern den inneren Zusammenhalt der Haftklebeschicht derart erhöhen, dass diese Schichten auch ohne stützendes Papiervlies, d.h. trägerlos, nach Abdeckung mit Trennpapieren zu Rollen aufgewickelt werden können. In Sonderfällen kann die erfindungsgemässe wasserlösliche Haftklebemasse auch direkt auf die zu verklebenden Substrate aufgesprüht oder aufgestrichen werden.

Ausser ihrer Verwendbarkeit in Form von Klebestreifen zum Endlosmachen von Papierbahnen können die wasserlöslichen Selbstklebemassen gemäss der Erfindung für viele andere Zwecke eingesetzt werden, bei denen die Verwendung eines derartigen Haftklebertyps vorteilhaft ist, beispielsweise zur Herstellung von gut ablösbaren Etiketten für Untergründe aus empfindlichem und spaltbarem Material sowie zur Herstellung von durch Wasserbehandlung leicht entfernbaren Abdeckbändern aus Papier, die insbesondere bei der Verschickung und dem Transport von sanitären Anlagen (Badewannen, Waschbecken usw.) zur Verhinderung von Beschädigungen verwendet werden.

Die Erfindung wird nachstehend an Hand von Beispielen näher erläutert:

Beispiel 1

In ein 2-Liter-Glasgefäss (Dreihalsapparatur), das mit Ankerrührer, Rückflusskühler, Stickstoff-Einleitungsrohr und Thermometer versehen war, wurden 210 g Acrylsäurebutylester (70 Gew.-%, bezogen auf das Gesamtgewicht der Monomeren), 45 g Acrylsäure (15 Gew.%, bezogen auf das Gesamtgewicht der Monomeren), 30 g Fumarsäure-di-2-äthylhexylester (10 Gew.-%, bezogen auf das Gesamtgewicht der Monomeren) und 15 g Vinylacetat (5 Gew.-%, bezogen auf das Gesamtgewicht der Monomeren) in einem Lösungsmittelgemisch von 90 g Aceton und 90 g Benzin (Siedebereich: 40-60°C) gelöst und nach Verdrängen des Luftsauerstoffs mittels Durchleiten von Stickstoff unter Rühren auf 59°C erhitzt. Nach Zufügen von 3 mg Tetrabrommethan als Reglersubstanz wurde die Polymerisation durch Zugabe von 30 mg Azoisobuttersäuredinitril gestartet. Mit ansteigender Viskosität wurde der Reaktionsmasse ein Lösungsmittelgemisch aus insgesamt 600 g Aceton und 150 g Toluol in drei Anteilen verteilt innerhalb von etwa 6-8 Stunden zugesetzt, um die Rührfähigkeit des Reaktionsgütes zu erhalten. Nach einer Reaktionszeit von 4 bzw. 8 Stunden wurden jeweils weitere 30 mg Azoisobuttersäuredinitril nachdosiert. Die Temperatur wurde während der gesamten Polymerisation so eingestellt, dass das Lösungsmittelgemisch ständig im Sieden gehalten wurde. Sie sank von 59°C bei Beginn der Reaktion auf etwa 56°C gegen Ende der Polymerisation. Polymergehalt der Lösung nach Beendigung der Polymerisation: 24,3 Gew.-%. Die relative Viskosität einer 1%igen Lösung des erhaltenen Copolymerisats in Äthanol bei 25°C betrug 2,917.

Es soll in diesem Zusammenhang vermerkt werden, dass bei Anwesenheit der Kombination von Fumarsäurediester und Vinylacetat im Monomerengemisch als Acrylsäure-Komponente auch eine stark durch Diacrylsäure verunreinigte Acrylsäure ohne weitere Vorbehandlung eingesetzt werden kann, was ansonsten bei empfindlichen Rezepturen wegen der durch den Gehalt an Diacrylsäure bedingten Neigung zur Gelbildung während der Polymerisation nicht möglich ist.

Zu 800 g der erhaltenen Polymerlösung (entspr. 195 g Polymerisat) wurden 180 g eines äthoxylierten tert. N-Alkyldiamins («Ethoduomeen T20», Akzo Chemie), 60 g eines Kolophonium-Klebharzes (hydriertes Kolophonium-Harz, Erweichungspunkt (Ring/Kugel): 68°C, SZ: 164) («Staybelite»-Harz, Hercules), 50 g Aceton, 50 g Toluol und 120 g einer 30%igen wässrigen Kaliumhydroxidlösung (1,4 Neutralisationsäquivalente) unter Rühren in der beschriebenen Reihenfolge zugesetzt. Die so erhaltene Haftkleberlösung wurde auf ein beidseitig silikonisiertes Trennpapier mittels einer üblichen Auftragsvorrichtung in einer solchen Dicke aufgetragen, dass nach dem Trocknen bei etwa 70°C eine Klebstoffschicht einer Stärke von 50 g/m² auf dem Trennpapier erhalten wurde. Auf diese Haftklebeschicht wurde alsdann ein leichtes repulpierbares Cellulosefaservlies kaschiert und anschliessend wiederum ein Haftklebefilm einer Schichtstärke von 50 g/m² auf die Vliesoberfläche aufgebracht. Das so erhaltene flächige bahnförmige Material wurde zu Rollen gewickelt. Nach Abziehen des Trennpapiers wurde ein beidseitig klebendes repulpierbares Haftklebeband erhalten, das für Verklebungen beim fliegenden Ballenwechsel in Papierbeschichtungsanlagen hervorragend geeignet ist.

Testergebnisse:
Wasserlöslichkeit der Haftklebemasse in ruhendem Wasser bei pH 3, 7 und 9: rasche und klare Lösung

| | |
|---|---|
| Soforthaftung auf Streichrohpapier: | sehr gut |
| Schertest zwischen Streichrohpapier | |
| 500 g Belastung bei 1,3 × 2 cm | |
| Verklebungsfläche | (min) |
| Frischmuster | 10–12 |
| Lagerung: 1 Monat/RT | 18–20 |
| Lagerung: 1 Monat/40°C | 9–10 |
| Lagerung: 2 Wochen/70°C | 8 |
| | |
| Klebkraft auf Stahl | (N/cm) |
| Frischmuster | 2,8–3,5 |
| Lagerung: 1 Monat/RT | 2,0–2,2 |
| Lagerung: 1 Monat/40°C | 2,3 |
| Lagerung: 2 Wochen/70°C | 1,7–1,8 |
| | |
| Abzugskraft vom Trennpapier | (cN/cm) |
| Frischmuster | 5 |
| Lagerung: 1 Monat/RT | 10–14 |
| Lagerung: 1 Monat/40°C | 10–20 |
| Lagerung: 2 Wochen/70°C | 15–25 |
| | |
| Abrollkraft beim Abziehen | |
| von der Rolle | (cN/cm) |
| Frischmuster | 6–9 |
| Lagerung: 1 Monat/RT | 15–39 |
| Lagerung: 1 Monat/40°C | 24–64 |
| Lagerung: 2 Wochen/70°C | 30–110 |

RT = Raumtemperatur

Beispiel 2

In einer 2 Liter fassenden Polymerisationsapparatur aus Glas, die wie im Beispiel 1 beschrieben ausgerüstet war, wurde ein Gemisch aus 234 g Acrylsäurebutylester (78 Gew.-%, bezogen auf das Gesamtgewicht der Monomeren), 45 g Acrylsäure (15 Gew.-%, bezogen auf das Gesamtgewicht der Monomeren), 15 g Fumarsäure-di-2-äthylhexylester (5 Gew.-%, bezogen auf das Gesamtgewicht der Monomeren) und 6 g Vinylacetat (2 Gew.-%, bezogen auf das Gesamtgewicht der Monomeren) wie in Beispiel 1 beschrieben, polymerisiert. Abweichend vom dort beschriebenen Herstellungsverfahren wurde mit ansteigender Viskosität im vorstehenden Falle ein Lösungsmittelgemisch von 350 g Aceton und 250 g Toluol in drei Anteilen innerhalb einer Zeit von 6 bis 8 Stunden dem Reaktionsgemisch zugesetzt. Der Polymergehalt der Lösung betrug nach Beendigung der Polymerisation 27,2 Gew.-%. Die relative Viskosität einer 1%igen Lösung des erhaltenen Copolymerisats in Äthanol bei 25°C betrug 2,527.

800 g der erhaltenen Polymerlösung wurden mit 120 g eines äthoxylierten Phenols (Oxyäthylenphenyläther) mit 4 Molen Äthylenoxid-Einheiten addiert je Mol Phenol («Pycal 94», Atlas Chemie GmbH), 40 g eines Kolophonium-Klebharzes (disproport. Kolophonium-Harz, Erw.-punkt (Kofler-Bank): 66–72°C) («Resin 731 D», Abieta-Chemie), 50 g Aceton und 50 g Toluol sowie 100 g einer 30%igen wässrigen Kaliumhydroxidlösung unter Rühren vermischt. Die so erhaltene Haftkleberlösung wurde wie im Beispiel 1 beschrieben zu einem repulpierbaren beidseitig klebenden Haftklebeband verarbeitet.

Testergebnisse:
Wasserlöslichkeit der Haftklebemasse in ruhendem Wasser bei pH 3, 7 und 9: sehr rasch, etwas trübe Lösung

| | |
|---|---|
| Soforthaftung auf Streichrohpapier: | sehr gut |

Schertest zwischen Streichrohpapier
500 g Belastung bei 1,3 × 2 cm

| Verklebungsfläche | (min) |
|---|---|
| Frischmuster | 7–9 |
| Lagerung: 1 Monat/RT | 7–9 |
| Lagerung: 1 Monat/40°C | 7 |
| Lagerung: 2 Wochen/70°C | 7 |

| Klebkraft auf Stahl | (N/cm) |
|---|---|
| Frischmuster | 2,8 |
| Lagerung: 1 Monat/RT | 2 |
| Lagerung: 1 Monat/40°C | 2 |
| Lagerung: 2 Wochen/70°C | 2,4 |

| Abzugskraft vom Trennpapier | (cN/cm) |
|---|---|
| Frischmuster | 6 |
| Lagerung: 1 Monat/RT | 15 |
| Lagerung: 1 Monat/40°C | 25 |
| Lagerung: 2 Wochen/70°C | 80 |

| Abrollkraft beim Abziehen von der Rolle | (cN/cm) |
|---|---|
| Frischmuster | 6 |
| Lagerung: 1 Monat/RT | 30 |
| Lagerung: 1 Monat/40°C | 60 |
| Lagerung: 2 Wochen/70°C | 120 |

RT = Raumtemperatur

Beispiel 3
(mit Alkanolamin-Neutralisationsmittel anstelle von KOH gemäss Stand der Technik)
In der in den vorhergehenden Beispielen 1 und 2 beschriebenen Glasapparatur wurde ein Monomerengemisch aus 240 g Acrylsäurebutylester (80 Gew.-%, bezogen auf das Gesamtgewicht der Monomeren) und 60 g Acrylsäure (20 Gew.-%, bezogen auf das Gesamtgewicht der Monomeren) in 240 g Aceton unter Zusatz von 0,2 g Tetrabrommethan und 0,3 g Azoisobuttersäuredinitril wie im Beispiel 1 beschrieben polymerisiert. Die relative Viskosität einer 1%igen Lösung des erhaltenen Copolymerisats in Äthanol bei 25°C betrug 2,587.

30 g der erhaltenen Polymerisatlösung wurden mit 2,5 g eines äthoxylierten Phenols mit 4 Molen Äthylenoxid-Einheiten je Mol Phenol («Pycal 94», Atlas Chemie GmbH), 1,7 g 2-Methylaminobutanol-1, 0,9 g eines Kolophonium-Klebharzes (disproport. Kolophoniumharz, Erw.punkt (Kofler-Bank): 66–72°C) («Resin 731 D», Abieta Chemie) und 8 g Isopropanol unter Rühren vermischt.

Die erhaltene sirupöse, schwach trübe Lösung wurde wie im Beispiel 1 beschrieben zu einem Haftklebefilm verarbeitet, getrocknet und wie zuvor getestet. Soforthaftung («Tack»), Wasserlöslichkeit und Zeitstandswert (9 Minuten) fielen deutlich schlechter aus als beim Produkt gemäss Beispiel 1.

Beispiel 4
In eine zylinderförmige 2 Liter fassende Vierhalsapparatur mit Rückflusskühler, Ankerrührer, Thermometer und Gaseinleitungsrohr wurden ein Gemisch aus 192 g Acrylsäure-n-butylester (64 Gew.-%, bezogen auf das Gesamtgewicht der Monomeren), 45 g Acrylsäure (15 Gew.-%, bezogen auf das Gesamtgewicht der Monomeren), 45 g Fumarsäure-di-n-butylester (15 Gew.-%, bezogen auf das Gesamtgewicht der Monomeren), 18 g Vinylacetat (6 Gew.-%, bezogen auf das Gesamtgewicht der Monomeren) und 100 g eines Gemisches von Benzin (Siedegrenzen: 40–60°C) und Aceton im Gewichtsverhältnis von 1:1 gegeben. Durch Durchleiten von Stickstoff wurde die Luft aus der Apparatur verdrängt. Alsdann wurde das Gemisch bis zum beginnenden Sieden (66°C) erhitzt und 0,3 g Benzoylperoxid hinzugefügt. Nach Einsetzen der Polymerisation stieg die Temperatur vorübergehend auf 68°C an. Mit zunehmender Viskosität der Reaktionslösung wurde jeweils in Anteilen von 50 ml – verteilt über einen Zeitraum von 12 Stunden – ein Gemisch aus 300 g Toluol und 400 g Aceton zugegeben. Während der Polymerisation sank die Temperatur allmählich ab. Bei 60°C wurden innerhalb von 4 Stunden zweimal je 0,4 g Azoisobuttersäuredinitril zugesetzt. Nach etwa 6 Stunden war die Reaktionstemperatur auf 58°C gesunken. Die gesamte Reaktionszeit betrug 18 Stunden, Polymergehalt der Lösung nach Beendigung der Polymerisation: 26,1 Gew.-%. Die relative Viskosität einer 1%igen Lösung des erhaltenen Copolymerisats in Äthanol bei 25°C betrug 2,693.

Zu 70 g der in der beschriebenen Weise hergestellten Polymerisatlösung wurden 18 g eines äthoxylierten tert. N-Alkyl-diamines («Ethoduomeen T 20», Akzo Chemie) gegeben. Anschliessend wurden 6 g eines Kolophonium-Klebharzes (hydriertes Kolophonium-Harz, Erweichungspunkt (Ring/Kugel): 68°C, SZ: 164): («Staybelite»-Harz, Hercules), gelöst in 10 g eines Gemisches aus Toluol und Aceton im Gew.-verhältnis 1:1, in die Mischung eingerührt. Die erhaltene klare Lösung wurde anschliessend mit 12 g einer 30%igen wässrigen Kaliumhydroxidlösung unter Rühren versetzt. Es entstand eine streichfähige sirupartige Lösung, die nach dem Trocknen einen wasserlöslichen Haftklebefilm ergab. Mit Natriumhydroxid konnten in allen aufgezeigten Beispielen keine gebrauchsfähigen Haftklebemassen erstellt werden.

Ein leicht repulpierbares Cellulosefaser-Vlies wurde mit dieser Lösung in einer solchen Schichtstärke beschichtet, dass nach dem Trocknen etwa 50 g/m² Haftklebemasse auf das Vlies gleichmässig aufgetrocknet waren.

Ein so hergestelltes Haftklebeband wurde bei einer Verklebungsfläche von 1,3 × 2 cm auf Streichrohpapier und einer Belastung von 500 g Zugkraft parallel zur Verklebung innerhalb von 20 bis 25 Minuten abgeschert (relative Luftfeuchte: etwa 50%).

Beim kurzfristigen, drucklosen Berühren der Haftklebeschicht mit einer Oberfläche eines Streifens Streichrohpapier wurde beim Abheben des Klebebandes die gesamte von der Haftklebemasse berührte Oberfläche des Papiers aufgerissen und gespalten (Schlaufentest für die Messung der Anfassklebkraft (Tack)). Dieses Ergebnis entspricht einer sehr guten Soforthaftung.

Die Zeit, die benötigt wurde, um die gemäss dem vorstehenden Beispiel hergestellte Haftklebeschicht ohne mechanische Einwirkung mit Wasser vom Vlies zu lösen, betrug 5 bis 12 Minuten in einem pH-Bereich von 3 bis 9.

Diese Ergebnisse beweisen die ausgezeichneten Eigenschaften der erfindungsgemässen wasserlöslichen Selbstklebemasse.

Die obengenannten Warenzeichen werden als solche anerkannt.

## Patentansprüche

1. Wasserlösliche, als vikose Lösung auftragbare druckempfindliche Selbstklebemasse auf der Basis eines Gemisches aus einem Acrylsäureester-Vinylcarbonsäure-Copolymerisat und einem wasserlöslichen Weichmacher, bei dem der Säureanteil des Copolymerisats zu einem überwiegenden Teil neutralisiert ist, dadurch gekennzeichnet, dass das Gemisch, bezogen auf 100 Gewichtsteile Feststoffe, aus

a) 30 bis 80 Gewichtsteilen eines Copolymerisats aus 70 bis 88 Gewichts-% Acrylsäurebutylester und 12 bis 30 Gewichts-%, vorzugsweise 15 bis 22 Gewichts-%, einer Vinylcarbonsäure, dessen Acrylsäurebutylester-Anteil, bezogen auf das Gesamtgewicht der Monomeren, zu 3 bis 12 Gewichts-% durch Acrylsäure-2-äthylhexylester und/oder zu 5 bis 25 Gewichts-% durch eine Mischung von Vinylacetat mit einem Fumarsäuredialkylester ersetzt sein kann, und
b) 20 bis 70 Gewichtsteilen eines äthoxylierten (Alkyl)phenols, eines äthoxylierten Alkylmono- oder -diamins oder einer äthoxylierten Alkylammonium-Verbindung als Weichmacher

besteht, wobei der Säureanteil des Copolymerisats praktisch vollständig mit Kaliumhydroxid (Kalilauge), vorzugsweise unter Verwendung eines Überschusses dieser Base, neutralisiert ist.

2. Wasserlösliche Selbstklebemasse nach Anspruch 1, dadurch gekennzeichnet, dass die Vinylcarbonsäure im Copolymerisat aus Acrylsäure, Methacylsäure oder Itaconsäure oder deren Mischungen besteht.

3. Wasserlösliche Selbstklebemasse nach den Ansprüchen 1 oder 2, dadurch gekennzeichnet, dass der Fumarsäure-dialkylester aus Fumarsäure-di-2-äthylhexylester oder Fumarsäure-di-n-butylester besteht.

4. Wasserlösliche Selbstklebemasse nach den Ansprüchen 1 bis 3, dadurch gekennzeichnet, dass die Komponente a) des Gemisches aus einem Copolymerisat besteht, das durch Polymerisation (jeweils bezogen auf das Gesamtgewicht der Monomeren) von 58 bis 80 Gewichts-% Acrylsäurebutylester mit 15 bis 22 Gewichts-% Acrylsäure und 5 bis 20 Gewichts-% einer Mischung von Vinylacetat mit Fumarsäure-di-2-äthylhexylester im Verhältnis 1:2 bis 1:4 erhalten wurde.

5. Wasserlösliche Selbsklebemasse nach den Ansprüchen 1 bis 4, dadurch gekennzeichnet, dass zur Neutralisation des Säureanteils des Copolymerisats eine solche Menge an Kaliumhydroxid (Kalilauge) verwendet wird, dass auf ein Mol Carboxylgruppen im Polymer zumindest ein Mol der Base eingesetzt wird.

6. Wasserlösliche Selbstklebemasse nach den Ansprüchen 1 bis 5, dadurch gekennzeichnet, dass sie zusätzlich, bezogen auf den Feststoffanteil des Gesamtgemisches, 2 bis 30 Gewichts-% eines wasserunlöslichen Klebharzes enthält.

7. Verwendung der wasserlöslichen Selbstklebemasse nach den Ansprüchen 1 bis 6 zum ein- oder beidseitigen Beschichten von flächenförmigen, biegsamen Trägern zur Herstellung von selbstklebenden Bändern.

## Claims

1. Water-soluble pressure-sensitive self-adhesive composition which can be applied as a viscous solution, is based on a mixture of an acrylate/vinylcarboxylic acid copolymer and a water-soluble plasticiser and in which the acid content of the copolymer has been predominantly neutralised, characterised in that the mixture, relative to 100 parts by weight of solids, consists of
a) 30 to 80 parts by weight of a copolymer which consists of 70 to 88% by weight of butyl acrylate and 12 to 30% by weight, preferably 15 to 22% by weight, of a vinylcarboxylic acid and whose butyl acrylate content, relative to the total weight of monomers, can be replaced to 3 to 12% by weight by 2-ethylhexyl acrylate and/or to 5 to 25% by weight by a mixture of vinyl acetate and a dialkyl fumarate and
b) 20 to 70 parts by weight of an ethoxylated (alkyl)-phenol, of an ethoxylated alkylmonoanime or alkyldiamine or of an ethoxylated alkylammonium compound as plasticiser where the acid content of the copolymer has been virtually completely neutralised with potassium hydroxide, preferably with an excess of this base.

2. Water-soluble self-adhesive composition according to Claim 1, characterised in that the vinylcarboxylic acid in the copolymer consists of acrylic acid, methacrylic acid or itaconic acid or mixtures thereof.

3. Water-soluble self-adhesive composition according to Claim 1 or 2, characterised in that the dialkyl fumarate consists of di-2-ethylhexyl fumarate or di-n-butyl fumarate.

4. Water-soluble self-adhesive composition according to Claims 1 to 3, characterised in that component a) of the mixture consists of a copolymer obtained by polymerising (in each case relative to the total weight of the monomers) 58 to 80% by weight of butyl acrylate with 15 to 22% by weight of acrylic acid and 5 to 20% by weight of a mixture of vinyl acetate and di-2-ethylhexyl fumarate in a ratio of 1:2 to 1:4.

5. Water-soluble self-adhesive composition according to Claims 1 to 4, characterised in that the acid content of the copolymer is neutralised with such an amount of potassium hydroxide that at least one mol of base is employed per mol of carboxyl groups in the polymer.

6. Water-soluble self-adhesive composition according to Claims 1 to 5, characterised in that it also contains, relative to the solids content of the total mixture, 2 to 30% by weight of a water-insoluble adhesive resin.

7. The use of a water-soluble self-adhesive composition according to Claims 1 to 6, for coating one or both sides of sheet-like flexible substrates to prepare self-adhesive tapes.

## Revendications

1. Composition autocollante sensible à la pression, soluble dans l'eau, applicable sous forme de solution visqueuse à base d'un mélange d'un copolymère d'ester d'acide acrylique et d'acide vinylcarboxylique et d'un plastifiant soluble dans l'eau, dans lequel la fraction acide du copolymère est neutralisée en proportion prépondérante, caractérisée en ce que le mélange consiste, pour 100 parties en poids de solides, en

a) 30 à 80 parties en poids d'un copolymère de 70 à 88% en poids d'acrylate de butyle et de 12 à 30% en poids et de préférence de 15 à 22% en poids d'un acide vinylcarboxylique, dont la fraction d'acrylate de butyle, sur base du poids total des monomères, peut être remplacée pour 3 à 12% en poids par de l'acrylate de 2-éthylhexyle et/ou pour 5 à 25% en poids par un mélange d'acétate de vinyle et d'un fumarate de dialcoyle, et

b) 20 à 70 parties en poids d'un (alcoyl) phénol éthoxylé, d'une alcoylmono- ou diamine éthoxylée ou d'un dérivé d'alcoylammonium éthoxylé comme plastifiant

la fraction acide du copolymère étant neutralisée de façon pratiquement complète par de l'hydroxyde de potassium (potasse caustique), de préférence au moyen d'un excès de cette base.

2. Composition autocollante soluble dans l'eau suivant la revendication 1, caractérisée en ce que l'acide vinylcarboxylique du copolymère consiste en acide acrylique, en acide méthacrylique ou en acide itaconique, ou bien en mélanges de ceux-ci.

3. Composition autocollante soluble dans l'eau suivant la revendication 1 ou 2, caractérisée en ce que le fumarate de dialcoyle consiste en fumarate de di-2-éthylhexyle ou en fumarate de di-n-butyle.

4. Composition autocollante soluble dans l'eau suivant les revendications 1 à 3, caractérisée en ce que le constituant a) du mélange consiste en un copolymère qui a été obtenu par polymérisation (chacun sur base du poids total des monomères) de 58 à 80% en poids d'acrylate de butyle avec 15 à 22% en poids d'acide acrylique et 5 à 20% en poids d'un mélange d'acétate de vinyle avec du furmarate de di-2-éthylhexyle dans un rapport molaire de 1:2 à 1:4.

5. Composition autocollante soluble dans l'eau suivant les revendications 1 à 4, caractérisée en ce que pour la neutralisation de la fraction acide du copolymère, la quantité d'hydroxyde de potassium (potasse caustique) utilisée est telle qu'au moins 1 mole de la base est mise en œuvre pour 1 mole de radicaux carboxyle dans le polymère.

6. Composition autocollante soluble dans l'eau suivant les revendications 1 à 5, caractérisée en ce qu'elle contient, en outre, sur base de la teneur en solides du mélange complet, 2 à 30% en poids d'une résine adhésive insoluble dans l'eau.

7. Utilisation de la composition autocollante soluble dans l'eau suivant les revendications 1 à 6 pour le revêtement, sur une face ou les deux, de supports souples plats pour la fabrication de bandes autocollantes.